(19)

Europäisches
Patentamt
European
Patent Office
Office européen
des brevets

(11) **EP 3 499 516 A1**

(12) **EUROPEAN PATENT APPLICATION**

(43) Date of publication:
**19.06.2019 Bulletin 2019/25**

(21) Application number: **17206678.9**

(22) Date of filing: **12.12.2017**

(51) Int Cl.:
*H01B 7/00* (2006.01)        *C08K 3/22* (2006.01)
*C08K 3/38* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Borealis AG**
**1220 Vienna (AT)**

(72) Inventors:
- **Nilsson, Susanne**
  **41135 Göteborg (SE)**
- **Nilsson, Linnea**
  **41260 Göteborg (SE)**
- **Sultan, Bernt-Åke**
  **SE-444 42 Stenungsund (SE)**

(74) Representative: **Kador & Partner PartG mbB**
**Corneliusstraße 15**
**80469 München (DE)**

(54) **FLAME RETARDANT AND FIRE RESISTANT POLYOLEFIN COMPOSITION**

(57)    The present invention is directed to a polyolefin composition which has flame retardant and/or fire resistant properties and is suitable as flame retardant and/or fire resistant layer of a wire or cable. The polyolefin composition of the present invention comprises an polyolefin homo- or copolymer, ground magnesium hydroxide having particle size distribution $D_{50}$ of 1.5 to 5.0 $\mu$m in an amount of 30 to 65 wt% based on the weight of the polyolefin composition, and a silicone fluid or gum in an amount of 0.1 to 20 wt% based on the weight of the polyolefin composition.

The present invention is further directed to a wire or cable comprising one or more layers, wherein at least one layer thereof is obtained from the polyolefin composition of the present invention. Finally, the present invention is further directed to the use of a polyolefin composition of the present invention as a flame retardant layer of a wire or cable.

EP 3 499 516 A1

**Description**

TECHNICAL FIELD

The present invention is directed to a polyolefin composition which has flame retardant and fire resistant properties and is suitable as flame retardant and/or fire resistant layer of a wire or cable. The present invention is further directed to a wire or cable comprising one or more layers, wherein at least one layer thereof comprises the polyolefin composition of the present invention. Finally, the present invention is further directed to the use of a polyolefin composition of the present invention as a flame retardant layer of a wire or cable.

BACKGROUND OF THE INVENTION

A typical electrical power cable or wire generally comprises one or more conductors in a cable core, which is surrounded by one or more insulation layers or sheaths of polymeric material. The core is typically copper or aluminium but it may also be non-metallic, surrounded by a number of different polymeric layers, each serving a specific function, e.g. a semi-conducting shield layer, an insulation layer, a metallic tape shield layer and a polymeric jacket. Each layer can provide more than one function. For example, low voltage wire or cable is often surrounded by a single polymeric layer that serves as both an insulating layer and an outer jacket, while medium to extra-high voltage wire and cable are often surrounded by at least separate insulating and jacket layers. A power cable core may for example be surrounded by a first polymeric semiconducting shield layer, a polymeric insulating layer, a second polymeric semiconducting shield layer, a metallic tape shield, and a polymeric jacket.

A wide variety of polymeric materials have been utilized as electrical insulating and shield materials for cables.

Such polymeric materials in addition to having suitable dielectric properties must also be enduring and must substantially retain their initial properties for effective and safe performance over many years of service.

Such materials have also to meet stringent safety requirements as laid down in international standards. In particular, single cable, or bundle of cables, must not burn by itself or transmit fire; the combustion gases of a cable must be as harmless as possible to humans, the smoke and combustion gases formed must not obscure escape routes or be corrosive.

Following the invention of polyethylene (PE) in 1936, the value of its excellent electrical properties was quickly recognized and became the main focus for its rapid development.

Almost from the outset it was adopted as insulation in communication cables. With the invention of the peroxide crosslinking technique in the 1950's, PE also became the preferred material for the insulation of medium and high voltage cables. With the later development of silane grafting technologies and the arrival of ethylene vinyl silane copolymers, competitive techniques were also developed for low voltage cables. As a result, cables with crosslinked polyethylene (XLPE) insulation and PE jackets have gradually become the material of choice for energy distribution networks.

While infrastructure cabling is predominantly based on polyolefin, e.g. PE, building and equipment cables, which make up the largest percentage of all wiring and cabling, were usually polyvinyl chloride (PVC)-based. Due to the fact that these systems are installed within buildings and therefore close to the consumer, flame retardancy is an important aspect.

Minimizing or eliminating materials that potentially cause fire or contribute to its spread is a fundamental necessity to ensure the safety of people and the protection of property. Electrical wires and cables are essential to the functioning of virtually every aspect of modern life, in the home, transportation, communications and in the workplace, and therefore their composition is of critical importance in controlling fire risks. The same counts for non-electrical, e.g. optical, wires and cables in the field of communications.

Flame retardant (FR) issues are complex. While PVC has relatively low calorific value and therefore low burning potential, when exposed to fire it generates dense smoke, toxic gases and corrosive combustion products (hydrochloric acid), which may inhibit evacuation, damage equipment and even building structures. On the other hand, polyolefin compounds have an inherently higher calorific value and have difficulty matching the properties of PVC in terms of combustibility, however, in every other respect polyolefin products have superior combustion properties to those of PVC with regard to smoke, corrosiveness and toxicity.

In order to enable cable makers to capitalise on the broader advantages offered by polyolefins, developments in the 1980's to reduce their flamability resulted in compounds heavily loaded with flame retardant additives like aluminium hydroxide and magnesium hydroxide which decompose endothermically at temperatures between 200 and 600°C, thereby liberating inert gases. These flame retardant additives in polyolefins have the effect of slowing the rate of combustion as well as reducing their calorific value.

The drawback of using large amounts of such flame retardant additives is the deterioration of the processability and the mechanical properties of the polymer composition. The low extrusion temperature and highly viscous melt of these compounds results in a significant reduction in cable production speed compared with ordinary PVC or PE. These drawbacks make this technology impracticable as an alternative to PVC for standard cables. Instead, this technology is therefore used for special cables intended for critical installations such as public buildings, subways, ships and nuclear power stations. However, they are costly and their processing requires investment in extrusion equipment with low compression screws and optimised crossheads.

The usual technique for making flame retardant polyolefin compounds for Wire & Cable applications is by high loadings (50-65 wt%) of aluminium hydroxide. Two alternative flame retardant fillers are chalk ($CaCO_3$) and magnesium hydroxide ($Mg(OH)_2$).

Aluminium hydroxide starts to decompose at 200°C, which limits extrusion temperature to about 160°C, being below optimum for a high viscosity material. The alternative flame retardants do not have this limitation. Accordingly, flame retardant compounds have been developed which have a melt viscosity similar to unfilled PE. Consequently, they can be processed on standard PVC and PE extruders, without any major modifications, with a similar extrusion speed to that of unfilled PE and PVC.

US 5 034 056 discloses fire protectants containing relatively high loads of aluminium hydroxide and ground and/or nearly ground calcium borate, their production and use, and semifinished goods and finished parts containing them.

CN 1 752 130 discloses flame retardant materials based on ethylene-vinylacetate copolymers containing relatively high loads of nano-aluminium hydroxide (particle size 80 to 150 nm) and clay, and optionally up to 3% zinc borate.

WO 2004/113439 discloses flame-retardant polyolefin compounds and their use in surface coverings, wherein the flame-retardant polyolefin compounds contain both nanoclay and inorganic flame-retardant agents amongst which are metallic hydroxides and borate salts, the latter in an amount of 2 to 5 wt%.

EP 393 959 discloses a flame retardant polymer composition which is substantially free of halogen compounds and of organometallic salts comprising a copolymer of ethylene with one or more comonomers selected from the group consisting of alkyl acrylates, alkyl methacrylates, acrylic acid, methacrylic acid and vinyl acetate, further comprising a silicone fluid or gum and an inorganic filler, preferably calcium carbonate.

During burning, this technology allows formation of a physically and thermally stable charred layer that protects the polymer from further burning. This effect is achieved with a relatively small amount of chalk combined with the oxygen containing ethylene copolymer and a minor fraction of silicone elastomer. The decomposition products of the copolymer effervesce and generate a cellular structure. The polar decomposition part of the copolymer is at an early stage of the burning process reacting with the chalk, binding it to the char. At the same time water and carbon dioxide are formed, diluting the burnable gases. The char is stable, due to the decomposition of the silicone gum which is forming a glasslike layer. The properties and cost structure of this technology make it most interesting for the replacement of PVC in standard building cables.

Nevertheless, there is still a need for further improving flame retardant compositions for wire and cable applications based on polyolefins, e.g. PE. Trying to improve these compositions, the skilled person is faced with a conflict of aims.

As indicated already above, to achieve high flame retardant properties of halogen-free materials (i.e. PVC-free) it is necessary to add high amounts of flame retardant fillers like aluminium hydroxide. Therefore, it is difficult to meet the desired mechanical and electrical properties as well as an acceptable processing performance. In addition, the known flame retardant grades have low performance flame retardant properties and only fulfil category E (single wire burning test) in the construction product cable regulation (CPR). In order to fulfil the higher CPR classes (D to B2) it is essential to generate a strong char which is not falling off during the bunch cable fire test used for these classifications. Strong char is also essential for fire resistant cables, i.e. cables which will be in function also after a fire. After such cables have been subjected to fire, the char will in fact act as insulator.

Thus, the object of the present invention is to overcome the drawbacks of the state of the art and to provide a polyolefin-based flame retardant composition with improved flame retardant properties, while maintaining or even improving the desired mechanical and electrical properties as well as the processing performance. It is further desirable to provide fire resistant properties.

SUMMARY OF THE INVENTION

The present invention is based on the finding that the object can be solved by provision of a polyolefin composition comprising ground magnesium hydroxide having a predefined particle size distribution in combination with silicone fluid or gum.

The polyolefin composition according to the present invention has the advantage of having essentially no emission of harmful gases and combining excellent flame retardant properties with very good mechanical properties and processability.

In particular, the inventive compositions have outstanding flame retardant performance and give very strong char which might also allow their use for extrudable flame resistant applications.

Accordingly, the present invention is directed to a polyolefin composition comprising:

(A) a polyolefin homo- or copolymer,

(B) ground magnesium hydroxide having particle size distribution $D_{50}$ of 1.5 to 5.0 $\mu$m in an amount of 30 to 65 wt% based on the weight of the polyolefin composition, and

(C) a silicone fluid or gum in an amount of 0.1 to 20 wt% based on the weight of the polyolefin composition.

The term "polyolefin homo- or copolymer" as used herein denotes homopolymers or copolymers of ethylene and, alternatively, homopolymers or copolymers of propylene. Also mixtures thereof are possible. Copolymers are preferred.

The term "copolymer" as used herein covers polymers obtained from co-polymerisation of at least two, i.e. two, three or more different monomers, i.e. the term "copolymer" as used herein does include so-called terpolymers obtained from co-polymerisation of at least three different monomers.

The content of the polyolefin homo- or copolymer in the polyolefin composition of the present invention may be 15 to 60 wt%, preferably 20 to 50 wt%, more preferably 20 to 40 wt%.

As indicated already above, the polyolefin homo- or copolymer (A) can be a homopolymer or copolymer of ethylene or a homopolymers or copolymers of propylene. Suitable copolymers of ethylene are thermoplastic or elastomeric co-polymerisation products of ethylene with one or more $C_3$-$C_{12}$-alpha-olefins, preferably with propylene, 1-butene, 1-hexene and 1-octene. Preferably, these copolymers of ethylene have a density of 860 to 930 kg/m$^3$.

Suitable copolymers of propylene are co-polymerisation products of propylene with ethylene and/or one or more $C_4$-$C_{12}$-alpha-olefins, preferably with ethylene, 1-butene, 1-hexene and 1-octene. Preferred are block copolymers with ethylene and heterophasic propylene copolymers with, more preferably, ethylene as comonomer (in the matrix phase and/or in the dispersed phase).

The polyolefin homo- or copolymer (A) may be an ethylene copolymer comprising ethylene monomer units and comonomer units comprising a polar group.

Preferably, the comonomer units comprising a polar group are selected from the group consisting of olefinically unsaturated carboxylic acids, such as acrylic acid, methacrylic acid, maleic acid, and fumaric acid, acrylates, methacrylates, vinyl esters, such as vinyl carboxylate esters, such as vinyl acetate and vinyl pivalate, derivatives of acrylic acid or methacrylic acid, such as (meth)acrylonitrile and (meth)acrylic amide, vinyl ethers, such as vinyl methyl ether and vinyl phenyl ether, and mixtures thereof.

The term "(meth)acryl" is intended herein to embrace both acryl and methacryl.

Suitable (meth)acrylates are methyl(meth)acrylate, ethyl(meth) acrylate, butyl(meth)acrylate and hydroxyethyl(meth)acrylate.

Amongst these comonomer units, vinyl esters of monocarboxylic acids having 1 to 4 carbon atoms, such as vinyl acetate, and (meth)acrylates of alcohols having 1 to 4 carbon atoms, such as methyl(meth)acrylate, are particularly preferred.

Especially preferred comonomer units are butyl acrylate, ethyl acrylate and methyl acrylate. Two or more such olefinically unsaturated compounds may be used in combination.

The content of the comonomer units comprising a polar group may be 2 to 35 wt%, preferably 5 to 30 wt%, more preferably 15 and 25 wt% based on the weight of the ethylene copolymer.

Further, the ethylene copolymer may comprise comonomer units comprising a crosslinkable silane group, wherein the comonomer units comprising a polar group are different from the comonomer units comprising a crosslinkable silane group.

The content of the comonomer units comprising a crosslinkable silane group may be 0.2 to 4 wt%, based on the weight of the ethylene copolymer.

According to the present invention, by the term "ground magnesium hydroxide" is meant magnesium hydroxide obtained by grinding minerals based on magnesium hydroxide, such as brucite and the like. Brucite is found in its pure form or, more often, in combination with other minerals such as calcite, aragonite, talc or magnesite, often in stratified form between silicate deposits, for instance in serpentine asbestos, in chlorite or in schists.

The mineral containing magnesium hydroxide can be ground according to the following technique. Advantageously, the mineral as obtained from the mine is first crushed, then ground, preferably repeatedly, each crushing/grinding step being followed by a sieving step.

The grinding can be effected under wet or dry conditions, for example by ball-milling, optionally in the presence of grinding coadjuvants, for example polyglycols or the like.

An important parameter commonly used to define the particle size of a particulate filler is the so called "$D_{50}$". $D_{50}$ is defined as the diameter (in $\mu$m) of the particles at which 50% by volume of the particles have a diameter greater than that figure and 50% by volume of the particles have a diameter less than that figure.

According to the present invention, particle size distribution $D_{50}$ of the ground magnesium hydroxide is of from 1.5 to 5 μm, preferably 2.5 to 3.5 μm. Particle size distribution $D_{50}$ is measured by laser diffraction as described in detail below.

In a preferred embodiment of the present invention, the specific BET surface area of the ground magnesium hydroxide, measured by a BET method described below, is from 1 to 20 $m^2/g$, preferably from 5 to 15 $m^2/g$, and more preferably from 8 to 15 $m^2/g$.

The ground magnesium hydroxide of the invention can contain impurities derived from salts, oxides and/or hydroxides of other metals, for example Fe, Mn, Ca, Si, and V. Amount and nature of the impurities can vary depending on the source of the starting mineral. The degree of purity is generally between 80 and 98% by weight. The ground magnesium hydroxide according to the present invention can be used as such or in the form of particles whose surface has been treated with at least one saturated or unsaturated fatty acid containing from 8 to 24 carbon atoms, or a metal salt thereof, such as, for example: oleic acid, palmitic acid, stearic acid, isostearic acid, lauric acid; magnesium or zinc stearate or oleate; and the like.

The amount of ground magnesium hydroxide which is suitable for imparting the desired flame-retardant properties is between 30 to 65 wt%, preferably 40 to 60 wt%, based on the weight of the polyolefin composition.

The silicone fluid or gum (C) may be selected from the group consisting of a polysiloxane, preferably a polydimethylsiloxane, a siloxane containing alkoxy and alkyl functional groups and mixtures thereof.

Suitable silicone fluids and gums include for example organopolysiloxane polymers comprising chemically combined siloxy units. Preferably, the siloxy units are selected from the group consisting of $R_3SiO_{0.5}$, $R_2SiO$, $R^1SiO_{1.5}$, $R^1R_2SiO_{0.5}$, $RR^1SiO$, $R^1_2SiO$, $RSiO_{1.5}$ and $SiO_2$ units and mixtures thereof in which each R represents independently a saturated or unsaturated monovalent hydrocarbon substituent, and each $R^1$ represents a substituent such as R or a substituent selected from the group consisting of a hydrogen atom, hydroxyl, alkoxy, aryl, vinyl or allyl groups.

Preferably, the organopolysiloxane has a viscosity of approximately 600 to $300 \cdot 10^6$ centipoise at 25°C. An example of an organopolysiloxane which has been found to be suitable is a polydimethylsiloxane having a viscosity of approximately $20 \cdot 10^6$ centipoise at 25°C. The silicone fluid or gum may contain up to 50% by weight fumed silica fillers of the type commonly used to stiffen silicone rubbers.

The amount of silicone fluid or gum included in the composition according to the present invention may be 0.1 to 10 wt%, more preferably 0.2 to 8 wt%, most preferably 0.5 to 8 wt% based on the weight of the polyolefin composition.

The polyolefin composition according to the present invention may further comprise a borate (D) in an amount of 5 to 25 wt%, preferably 6 to 20 wt%, more preferably 8-15 wt% based on the weight of the polyolefin composition. Combinations of these endpoints are possible.

Preferably, the borate is selected from the group consisting of a borate of an alkali metal, a borate of an alkaline earth metal, a borate of a metal of groups 3 to 12 of the periodic table of elements, a borate of aluminum, boric acid, boron phosphate, and mixtures thereof. More preferably, the borate is selected from the group consisting of sodium borate, calcium borate, zinc borate, and mixtures thereof.

According to a particularly preferred embodiment of the present invention, the borate comprises calcium borate, more preferably consists of calcium borate.

The weight ratio between metal hydroxide (B) and borate (D) may be between 1.2 and 10, preferably between 2.0 and 8.0, more preferably between 3.0 and 7.0.

Preferably, the $MFR_{21}$ (21.6 kg load, 190°C) of the polyolefin composition according to the present invention is at least 1 g/10 min, more preferably at least 10 g/10 min. The $MFR_{21}$ of the polyolefin composition according to the present invention may be below 100 g/10 min.

The limiting oxygen index (LOI) of the polyolefin composition according to the present invention may be between 30% and 80%, preferably from 35% to 70%, more preferably from 40% to 60%.

The polyolefin composition according to the present invention may be prepared by mixing together the polyolefin homo- or copolymer (A), the metal hydroxide (B), the silicone fluid or gum (C), and optionally the borate (D) using any suitable means such as conventional compounding or blending apparatus, e.g. a Banbury mixer, a 2-roll rubber mill or a twin screw extruder. Generally, the polyolefin composition is prepared by blending the above mentioned components together at a temperature which is sufficiently high to soften and plasticize the polymer, typically a temperature in the range of 120 to 300°C.

The polyolefin composition according to the present invention may further comprise additional ingredients such as, for example, antioxidants and small amounts of other conventional polymer additives such as stabilizers, e.g. water tree retardants, scorch retardants, lubricants, colouring agents and foaming agents. The total amount of additives may be from 0.3 to 10 wt%, preferably from 1 to 7 wt%, more preferably from 1 to 5 wt%.

Preferably an antioxidant comprises a sterically hindered phenol group or aliphatic sulphur groups. Such compounds are disclosed in EP 1 254 923 as particularly suitable antioxidants for stabilisation of polyolefin containing hydrolysable silane groups. Other preferred antioxidants are disclosed in WO 2005/003199. Preferably, the antioxidant is present in the composition in an amount of from 0.01 to 3 wt%, more preferably 0.05 to 2 wt%, and most preferably 0.08 to 1.5 wt%.

In case the polyolefin composition of the present invention is crosslinked, it may comprise a scorch retarder. The scorch retarder may be a silane containing scorch retarder as described in EP 449 939. If applicable, the scorch retarder may be present in the composition in an amount from 0.3 wt% to 5 wt%.

A particularly important use of the polyolefin composition of the present invention is for the manufacture of wires and cables. Cables may be communication cables or more preferably electrical or power cables. The compositions can be extruded around a wire or cable to form an insulating or jacketing layer or can be used as bedding compounds.

Therefore, the present invention is in a second aspect directed to a wire or cable comprising one or more layers, wherein at least one layer thereof is obtained from a polyolefin composition of the present invention as described above in detail.

The at least one layer obtained from a polyolefin composition of the present invention may be cross-linked.

In a third aspect, the present invention is also directed to the use of a polyolefin composition of the present invention as described above in detail as a flame retardant layer of a wire or cable.

The use of the polyolefin composition of the present invention as a flame retardant layer may comprise cross-linking thereof.

Usually, the cable is produced by co-extrusion of the different layers onto the conducting core. Then, crosslinking is optionally performed, preferably by moisture curing in case the polyolefin homo- or copolymer (A) comprises comonomer units comprising a crosslinkable silane group, wherein the silane groups are hydrolyzed under the influence of water or steam. Moisture curing is preferably performed in a sauna or water bath at temperatures of 70 to 100°C or at ambient conditions.

The compositions can be extruded around a wire or cable to form an insulating or jacketing layer or can be used as bedding compounds. The polymer compositions are then optionally crosslinked.

An insulation layer of a low voltage power cable may have a thickness of 0.4 mm to 3.0 mm, preferably below 2.0 mm, depending on the application. Preferably, the insulation is directly coated onto the electric conductor.

In the following the present invention is further illustrated by means of non-limiting examples.

DETAILED DESCRIPTION OF THE INVENTION

**1. Methods**

**a) Melt Flow Rate**

Melt flow rate (MFR) is measured according to ISO 1133 (Davenport R-1293 from Daventest Ltd). MFR values were measured at two different loads 2,16 kg ($MFR_{2,16}$) and 21.6 kg ($MFR_{21}$). The MFR values were measured at 150°C for ATH containing formulations. For all polymers and all other compounds the temperature of 190°C was used.

**b) Comonomer content**

Quantitative nuclear-magnetic resonance (NMR) spectroscopy was used to quantify the comonomer content of the polymer composition or polymer as given above or below in the context.

Quantitative 1H NMR spectra was recorded in the solution-state using a Bruker Advance III 400 NMR spectrometer operating at 400.15 MHz. All spectra were recorded using a standard broad-band inverse 5 mm probehead at 100°C using nitrogen gas for all pneumatics. Approximately 200 mg of material was dissolved in 1,2-tetrachloroethane-d2 (TCE-d2) using ditertiarybutylhydroxytoluen (BHT) (CAS 128-37-0) as stabiliser. Standard single-pulse excitation was employed utilizing a 30 degree pulse, a relaxation delay of 3 s and no sample rotation. A total of 16 transients were acquired per spectra using 2 dummy scans. A total of 32k data points were collected per FID with a dwell time of 60 $\mu$s, which corresponded to a spectral window of approx. 20 ppm. The FID was then zero filled to 64k data points and an exponential window function applied with 0.3 Hz line-broadening. This setup was chosen primarily for the ability to resolve the quantitative signals resulting from methylacrylate and vinyltrimethylsiloxane copolymerisation when present in the same polymer.

Quantitative 1H NMR spectra were processed, integrated and quantitative properties determined using custom spectral analysis automation programs. All chemical shifts were internally referenced to the residual protonated solvent signal at 5.95 ppm.

Characteristic signals resulting from the incorporation of vinylacetate (VA), methyl acrylate (MA), butyl acrylate (BA) and vinyltrimethylsiloxane (VTMS), in various comonomer sequences, were observed (J. Randall, Macromol. Sci., Rev. Macromol. Chem. Phys. 1989, C29, 201). All comonomer contents were calculated with respect to all other monomers present in the polymer.

The vinylacetate (VA) incorporation was quantified using the integral of the signal at 4.84 ppm assigned to the *VA sites, accounting for the number of reporting nuclei per comonomer and correcting for the overlap of the OH protons from BHT when present:

$$VA = (I_{*VA} - (I_{ArBHT})/2)/1$$

The methylacrylate (MA) incorporation was quantified using the integral of the signal at 3.65 ppm assigned to the 1 MA sites, accounting for the number of reporting nuclei per comonomer:

$$MA = I_{1MA}/3$$

The butylacrylate (BA) incorporation was quantified using the integral of the signal at 4.08 ppm assigned to the 4BA sites, accounting for the number of reporting nuclei per comonomer:

$$BA = I_{4BA}/2$$

The vinyltrimethylsiloxane incorporation was quantified using the integral of the signal at 3.56 ppm assigned to the 1VTMS sites, accounting for the number of reporting nuclei per comonomer:

$$VTMS = I_{1VTMS}/9$$

Characteristic signals resulting from the additional use of BHT as stabilizer were observed. The BHT content was quantified using the integral of the signal at 6.93 ppm assigned to the ArBHT sites, accounting for the number of reporting nuclei per molecule:

$$BHT = IArBHT / 2$$

The ethylene comonomer content was quantified using the integral of the bulk aliphatic (bulk) signal between 0.00 - 3.00 ppm. This integral may include the 1VA (3) and $\alpha$VA (2) sites from isolated vinylacetate incorporation, *MA and $\alpha$MA sites from isolated methylacrylate incorporation, 1 BA (3), 2BA (2), 3BA (2), *BA (1) and $\alpha$BA (2) sites from isolated butylacrylate incorporation, the *VTMS and $\alpha$VTMS sites from isolated vinylsilane incorporation and the aliphatic sites from BHT as well as the sites from polyethylene sequences. The total ethylene comonomer content was calculated based on the bulk integral and compensating for the observed comonomer sequences and BHT:

$$E = (1/4)*[I_{bulk} - 5*VA - 3*MA - 10*BA - 3*VTMS - 21*BHT]$$

It should be noted that half of the $\alpha$ signals in the bulk signal represent ethylene and not comonomer and that an insignificant error is introduced due to the inability to compensate for the two saturated chain ends (S) without associated branch sites.

The total mole fractions of a given monomer (M) in the polymer was calculated as:

$$fM = M/(E + VA+ MA + BA + VTMS)$$

The total comonomer incorporation of a given monomer (M) in mole percent was calculated from the mole fractions in the standard manner:

$$M [mol\%] = 100 * fM$$

The total comonomer incorporation of a given monomer (M) in weight percent was calculated from the mole fractions and molecular weight of the monomer (MW) in the standard manner:

$$M \text{ [wt\%]} = 100*(fM*MW)/((fVA*86.09) + (fMA*86.09) + (fBA*128.17) + (fVTMS*148.23) + ((1-fVA-fMA-fBA-fVTMS)*28.05))$$

If characteristic signals from other specific chemical species are observed, the logic of quantification and/or compensation can be extended in a similar manner to that used for the specifically described chemical species, e.g. identification of characteristic signals, quantification by integration of a specific signal or signals, scaling for the number of reported nuclei and compensation in the bulk integral and related calculations. Although this process is specific to the specific chemical species in question, the approach is based on the basic principles of quantitative NMR spectroscopy of polymers and thus can be implemented by a person skilled in the art as needed.

### c) Median particle size distribution $D_{50}$

Median particle size of metal hydroxide can be measured by laser diffraction (ISO13320), dynamic light scattering (ISO22412) or sieve analysis (ASTMD1921-06). In the additives used in the examples the determination of median particle size distribution $D_{50}$ was measured by laser diffraction according to ISO13320.

### d) BET surface area

Overall specific external and internal surface area is determined by measuring the amount of physically adsorbed gas according to the Brunauer, Emmett and Teller (BET) method, performed in accordance with DIN ISO 9277.

### e) Compression moulding

Plaques were prepared for cone calorimeter, LOI, tensile testing and char strength method with compression moulding (Collin R 1358, edition: 2/060510) according to ISO 29. The dimensions of the various plaques depended on the testing method and can be seen in Table 1.

**Table 1.** Test plaques

| Test method | Surface area (mm) | Thickness (mm) |
|---|---|---|
| Cone calorimeter | 100x100 | 3 |
| LOI | 140x150 | 3 |
| Tensile testing | 90x90 | 2 |
| Char strength method | 50x50 | 3 |

The amount of material used for each plaque was calculated by using the density. The material was placed between two sheets of Mylar film and positioned in a frame. The plaques were pressed at 150°C for 20 minutes and pressure of 114 bar.

### f) Cone calorimeter

The cone calorimeter (Dual cone calorimeter from Fire Testing Technology, FTT) method was carried out by following ISO 5660. The plaques prepared as described above were placed in a climate room with relative humidity 50 ± 5% and temperature 23°C for at least 24 hours prior to the test. Before initializing the tests, the smoke system, gas analyzers, c-factor value, heat flux and scale were calibrated through software ConeCalc 5. Drying aid and Balston filter were checked and exchanged if necessary. The sample plaques were weighed and the exact dimensions were determined before the bottom and sides were wrapped in a 0.3 mm thick aluminium foil and placed in a sample holder filled with a fiber blanket and a frame on top. The sample was placed in a horizontal position on a loading cell 60 mm from the cone radiant heater with heat flux 35 kW/m² and volume flow rate 24 l/min. An electric spark ignition source was placed above the sample and the starting time, time to ignition and end of test were recorded by pushing a button in ConeCalc 5 as they were observed. The test was performed two times on each formulation and after each test was completed, the formed char was obtained. This method was used for obtaining the values of time to ignition (s), time to flame out (s), PHRR (kW/m²), total heat release (MJ/m²) and total smoke (m²) in the Tables below.

### g) Limiting Oxygen Index (LOI)

LOI (Stanton Redcroft from Rheometric Scientific) was performed by following ASTM D 2863-87 and ISO 4589. The plaques prepared as described above were placed in a climate room with relative humidity 50 $\pm$ 5% and temperature 23°C for at least 24 hours prior to the test. Ten sample rods having length 135 mm, width 6.5 mm and thickness of 3 mm were punched from a plaque. A single sample rod was placed vertically in a glass chimney with a controlled atmosphere of oxygen and nitrogen that had been flowing through the chimney for at least 30 seconds and then ignited by an external flame on the top. If the sample had a flame present after three minutes or if the flame had burned down more than 50 mm, the test failed. Different oxygen concentrations were tested until a minimum oxygen level was reached were the sample passed the test and the flame was extinguished before three minutes or 50 mm.

### h) Tensile testing

Tensile testing was executed in accordance with ISO 527-1 and ISO 527-2 using an Alwetron TCT 10 tensile tester. Ten sample rods were punched from a plaque using ISO 527-2/5A specimen and placed in a climate room with relative humidity 50 $\pm$ 5% and temperature 23°C for at least 16 hours previous to the test. The sample rods were placed vertically between clamps with a distance of 50 $\pm$ 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

### i) Char strength

Preparation of the plaques used for char strength measurements was conducted in metal containers that were put on a coil heater and pre-burned before placing the containers in a furnace oven for 1 hour at 800°C, followed by cooling in room temperature. The char strength test was performed on a compression machine typically used when performing flexural modulus testing with a speed of 1 mm/min. The formed char was placed perpendicular to a penetrating member that consisted of a cylinder with a diameter of 3 mm. The thickness of the sample was measured and the instrument was set on penetrating 50% of the thickness. Three different areas on the surface were tested and the average value of the maximum resistance force was used. The method was not applicable for inspection of porous chars as the machine stopped recording the force when it dropped to zero when reaching a pore. Because of this, also visual inspection of the chars from the cone calorimeter was performed.

### j) Inspection of chars

The chars generated form the cone calorimeter measurements were inspected visually and tactilely in order to identify cracks, and to get a feeling for hardness and strength of the char. Each char was classified as being cracked or not. The char strength was classified according to a scale including categories very brittle, brittle, hard 1 (h1), hard 2 (h2) and hard 3 (h3). When the char is classified as very brittle, it shows no integrity at all and is destroyed even by an air flow generated by a human's breath. Brittle chars are those destroyed by the slightest touch. Since the very brittle and the brittle chars have such a low strength, it is not possible to measure the char strength by the char strength method described above. The char strength of the hardest chars classified h2 and h3 is measured by the char strength method described above and is between 4-5 N for h2-chars, and between 5-6 N for h3-chars. The chars classified as h1 are porous and for that reason not measurable by the char strength method above. The char strength of these chars is estimated to be between 1-4 N.

### k) Density

Density is measured according to ISO 1183-1 - method A (2004). Sample preparation is done by compression moulding in accordance with ISO 1872-2:2007.

### 2. Materials

a) **PE-ter** is a terpolymer of ethylene, 21 wt% methyl acrylate and 1,0 wt% vilnyltrimethoxi silane having MFR$_{2,16}$ of 2 g/10 min.

**b) gMDH(3)** is ground magnesium hydroxide (Apymag 80S), $Mg(OH)_2$, being modified by stearic acid surface treatment; having a median particle size distribution $D_{50}$ of 3 $\mu$m as determined by laser diffraction and BET surface area of 8 $m^2/g$, commercially available from Nabaltec AG Germany.

**c) CaB** is calcium meta borate ($B_2CaO_4 x2H_2O$) supplied by Sigma-Aldrich (Product number 11618), CAS-no. 13701-64-9, having a sieve residue on 200 $\mu$m mesh size of less than 0.1 wt%.

**d) PDMS1** is a pelletized silicone gum formulation (Genioplast Pellet S) with high loading of ultrahigh molecular weight (UHMW) siloxane polymer, commercially available from Wacker Chemie AG.

**e) PDMS2** is a masterbatch consisting of 40 wt% ultrahigh molecular weight polydimethyl siloxane polymer available from Dow Corning, and 60 wt% ethylene butylacrylate copolymer having a butylacrylate content of 13 wt% and $MFR_2$ of 0.3 g/10 min. The master batch is available from Borealis, Austria.

**f) OMS** is an organomodified siloxane (OMS 11-100), i.e. an alkoxy siloxane, commercially available from Dow Corning Corp.

**g) LLDPE** is a linear low density polyethylene (LE8706), having a density of 923 $kg/m^3$ and an $MFR_2$ (190 °C, 2.16 kg) of 0.85 g/10 min, commercially available from Borealis, Austria.

**h) VLDPE** is a very low density polyethylene (Queo 8203), the comonomer being 1-octene, produced in a solution polymerization process using a metallocene catalyst, having a density of 883 $kg/m^3$ and an $MFR_2$ (190 °C, 2.16 kg) of 3 g/10 min, commercially available from Borealis, Austria.

**i) AO** is octadecyl 3-(3',5'-di-tert-butyl-4-hydroxyphenyl)propionate, commercially available from BASF.

The compositions of the inventive and comparative examples are indicated in the following Tables 2 by giving the amounts of ingredients in percent by weight.

## 3. Results

**Table 2.**  Composition and properties of flame retardant compositions comprising ground metal hydroxide

| | CE1 | IE1 | IE2 | IE3 | IE4 | IE5 | IE6 |
|---|---|---|---|---|---|---|---|
| PE-ter | 36.8 | 36.8 | 34.8 | 24.8 | 26.1 | 36.8 | 34.8 |
| AO | 0.2 | 0.2 | 0.2 | 0.2 | 0.2 | 0.2 | 0.2 |
| LLDPE | - | - | – | 10.0 | – | – | - |
| VLDPE | - | - | – | – | 8.7 | – | - |
| gMDH(3) | 63.0 | 58.0 | 48.0 | 48.0 | 48.0 | 49.5 | 47 |
| CaB | - | – | 12.0 | 12.0 | 12.0 | 12.0 | 12.0 |
| PDMS1 | - | 5 | | | | | |
| PDMS2 | - | - | 5 | 5 | 5 | - | 5 |
| OMS | - | - | - | - | - | 1.5 | 1 |
| Char visual | h-1 | h-2 | h-3 | h-1, cracked | h-2, cracked | h-2 | h-2 |
| Char strength (N) | - | 5 | 5.5 | – | – | 4.5 | |
| LOI (%) | 31.5 | 38.5 | 42.5 | – | – | 51.5 | 48 |
| Time to ignition (s) | 144 | 145 | 282 | 103 | 92 | 104 | 92 |
| Time to flame out (s) | 1010 | 775 | 1070 | 830 | 770 | 1040 | 995 |
| PHRR (kW/m$^2$) | 101 | 119 | 85 | 99 | 111 | 99 | 79 |
| Total heat release (MJ/m$^2$) | 45 | 39 | 34 | 37 | 40 | 32 | 30 |
| Total smoke (m$^2$) | 0.4 | 0.8 | 1.1 | 2.0 | 1.5 | 1.6 | 1.6 |
| MFR$_{21}$ (g/10 min) | 3.9 | 13 | 24 | – | 20 | 14 | 24 |
| Tensile strength (MPa) | 10.3 | 7.4 | 9.6 | 11.3 | 11.2 | 10.2 | 9.1 |
| Elongation at break (%) | 60 | 61 | 80 | 64 | 89 | 86 | 98 |

As can be derived from Table 2, addition of silicone gum has a positive effect on the processability of the ground magnesium hydroxide (gMDH) based compositions. The silicone gum has a big positive effect on LOI and the char integrity and reduces the total heat release.

Further, PHRR and total heat release are reduced when calcium borate is added. The addition of a borate has also a big positive effect on the processability. The influence of the borates on the mechanical performance is positive for the ground magnesium hydroxide (gMDH) based compounds.

As can be seen in Table 2, the inventive formulations IE1-IE6 gave very high LOI and competitive cone calorimeter results. Further on, mechanical performance is good and processability is particularly improved. In all cases hard chars were generated.

Especially, formulations based on the terpolymer of ethylene (only) and silicone gum give strong char (IE1), being even stronger when combined with calcium borate (IE2, IE5 and IE6). The char strength and char integrity of these formulations are so good that they might work as protective char layer in an extrudable flame resistant application.

Further, compositions comprising OMS (IE5 and IE6) exhibited improved flame-retardant properties and very hard chars. OMS may thus be preferred, since it also has advantageous toxicity characteristics.

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

**Claims**

1. A polyolefin composition comprising:

   (A) a polyolefin homo- or copolymer,
   (B) ground magnesium hydroxide having particle size distribution $D_{50}$ of 1.5 to 5.0 $\mu$m in an amount of 30 to 65 wt% based on the weight of the polyolefin composition, and
   (C) a silicone fluid or gum in an amount of 0.1 to 20 wt% based on the weight of the polyolefin composition.

2. The polyolefin composition according to claim 1, said polyolefin composition further comprising:

   (D) a borate in an amount of 5 to 25 wt% based on the weight of the polyolefin composition.

3. The polyolefin composition according claim 2, wherein said borate (D) is selected from the group consisting of a borate of an alkali metal, a borate of an alkaline earth metal, a borate of a metal of groups 3 to 12 of the periodic table of elements, a borate of aluminium, boric acid, boron phosphate, and mixtures thereof.

4. The polyolefin composition according to claim 3, wherein said borate (D) is selected from the group consisting of sodium borate, calcium borate, zinc borate, and mixtures thereof.

5. The polyolefin composition according to claim 4, wherein said borate (D) comprises calcium borate.

6. The polyolefin composition according to any one of the preceding claims, wherein said silicone fluid or gum (C) is selected from the group consisting of a polysiloxane, preferably a polydimethylsiloxane, a siloxane containing alkoxy and alkyl functional groups and mixtures thereof.

7. The polyolefin composition according to claim 6, wherein said silicone fluid or gum (C) is an organomodified siloxane.

8. The polyolefin composition according to any one of the preceding claims, wherein said polyolefin homo- or copolymer (A) is an ethylene copolymer comprising ethylene monomer units and comonomer units comprising a polar group.

9. The polyolefin composition according to claim 8, wherein said ethylene copolymer further comprises comonomer units comprising a crosslinkable silane group, wherein said comonomer units comprising a polar group are different from said comonomer units comprising a crosslinkable silane group.

10. The polyolefin composition according to claim 9, wherein

    - the content of said comonomer units comprising a polar group is 2 to 35 wt%, or
    - the content of said comonomer units comprising a crosslinkable silane group is 0.2 to 4 wt%, or
    - the content of said comonomer units comprising a polar group is 2 to 35 wt% and the content of said comonomer units comprising a crosslinkable silane group is 0.2 to 4 wt%,

    based on the weight of said ethylene copolymer.

11. The polyolefin composition according to any one of the claims 8 to 10, wherein said comonomer units comprising a polar group are selected from the group consisting of acrylic acid, methacrylic acid, acrylates, methacrylates, vinyl esters, and mixtures thereof.

12. The polyolefin composition according to any one of the preceding claims, wherein said ground magnesium hydroxide (B) has particle size distribution $D_{50}$ of 2.5 to 3.5 $\mu$m.

13. The polyolefin composition according to any one of the preceding claims, wherein said ground magnesium hydroxide (B) has BET surface area of 1-20 $m^2$/g.

14. A wire or cable comprising one or more layers, wherein at least one layer thereof is obtained from a polyolefin composition according to any one of the claims 1 to 13.

15. Use of a polyolefin composition according to any one of the claims 1 to 13, optionally after cross-linking thereof, as a flame retardant layer of a wire or cable.

Europäisches
Patentamt

European
Patent Office

Office européen
des brevets

# EUROPEAN SEARCH REPORT

Application Number

EP 17 20 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/121804 A1 (ITALMATCH CHEMICALS SPA [IT]) 14 August 2014 (2014-08-14) * abstract; claims 1,7,8,13,15; examples C.14,C.21,C.23; tables 3,4 * | 1-4,6-8, 11-15 | INV. H01B7/00 ADD. C08K3/22 C08K3/38 |
| X | WO 01/12708 A1 (DOW CHEMICAL CO [US]) 22 February 2001 (2001-02-22) * abstract; claims 1,16 * * pages 4-9 * * page 10, lines 3-14 * * page 11, line 26 - page 12, line 9 * * page 15, line 15 - page 19, line 13 * | 1-4,6-8, 11-15 | |
| X | WO 2005/023924 A1 (UNION CARBIDE CHEM PLASTIC [US]; COGEN JEFFREY M [US]; JOW JINDER [US]) 17 March 2005 (2005-03-17) * abstract; claims 1,2,7,9,12; examples 10-12,14; Comp.Ex. 8; table II * * page 7, lines 11-20 * | 1-4,6-15 | |
| X | DATABASE CA [Online] CHEMICAL ABSTRACTS SERVICE, COLUMBUS, OHIO, US; 29 March 1997 (1997-03-29), YAMAMOTO, YASUAKI ET AL: "Flame-resistant cables", XP002781032, retrieved from STN Database accession no. 1997:204795 * abstract * -& JP H09 17244 A (HITACHI CABLE) 17 January 1997 (1997-01-17) | 1-4,6-8, 11-15 | TECHNICAL FIELDS SEARCHED (IPC) C08K C08L H01B |

-/--

| | | |
|---|---|---|
| The present search report has been drawn up for all claims | | |
| Place of search | Date of completion of the search | Examiner |
| Munich | 17 May 2018 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 17 20 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; 23 August 2011 (2011-08-23), QU, BAOJUN ET AL: "Halogen-free and flameproofing UV-crosslinkable polyolefin layer or sheath for cables", XP002781033, retrieved from STN Database accession no. 2011:1053063 * abstract * -& CN 102 153 802 A (MUYANG YOUWEI NEW MATERIAL CO LTD; HONGLONGJIANG ORIENT SCIENCE & TECH) 17 August 2011 (2011-08-17) ----- | 1-4,6-8, 11-15 | |
| X | DATABASE CA [Online] CHEMICAL ABSTRACTS SERVICE, COLUMBUS, OHIO, US; 10 September 2015 (2015-09-10), LIU, FEIWEI ET AL: "Preparation of ultraviolet-crosslinked low-smoke halogen-free and flame-retardant cable material", XP002781034, retrieved from STN Database accession no. 2015:1458379 * abstract * -& CN 104 893 088 A (SHANGHAI ORIGINALDOW ADVANCED COMPOUNDS CO LTD) 9 September 2015 (2015-09-09) ----- | 1-4,6-8, 11-15 | TECHNICAL FIELDS SEARCHED (IPC) |

The present search report has been drawn up for all claims

| Place of search | Date of completion of the search | Examiner |
|---|---|---|
| Munich | 17 May 2018 | Schütte, Maya |

## ANNEX TO THE EUROPEAN SEARCH REPORT
## ON EUROPEAN PATENT APPLICATION NO.

EP 17 20 6678

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2018

| Patent document cited in search report | | Publication date | Patent family member(s) | | Publication date |
|---|---|---|---|---|---|
| WO 2014121804 | A1 | 14-08-2014 | EP | 2954006 A1 | 16-12-2015 |
| | | | ES | 2628890 T3 | 04-08-2017 |
| | | | KR | 20150115856 A | 14-10-2015 |
| | | | PL | 2954006 T3 | 29-09-2017 |
| | | | US | 2015376368 A1 | 31-12-2015 |
| | | | WO | 2014121804 A1 | 14-08-2014 |
| WO 0112708 | A1 | 22-02-2001 | AR | 026873 A1 | 05-03-2003 |
| | | | AU | 6623100 A | 13-03-2001 |
| | | | CA | 2381963 A1 | 22-02-2001 |
| | | | EP | 1226208 A1 | 31-07-2002 |
| | | | JP | 2003507508 A | 25-02-2003 |
| | | | TW | I250191 B | 01-03-2006 |
| | | | US | 6262161 B1 | 17-07-2001 |
| | | | WO | 0112708 A1 | 22-02-2001 |
| WO 2005023924 | A1 | 17-03-2005 | AT | 376028 T | 15-11-2007 |
| | | | CA | 2537130 A1 | 17-03-2005 |
| | | | CN | 1845957 A | 11-10-2006 |
| | | | DE | 602004009592 T2 | 24-07-2008 |
| | | | EP | 1664171 A1 | 07-06-2006 |
| | | | JP | 5216215 B2 | 19-06-2013 |
| | | | JP | 2007504339 A | 01-03-2007 |
| | | | MX | PA06002482 A | 20-06-2006 |
| | | | TW | I357437 B | 01-02-2012 |
| | | | US | 2007010615 A1 | 11-01-2007 |
| | | | WO | 2005023924 A1 | 17-03-2005 |
| JP H0917244 | A | 17-01-1997 | NONE | | |
| CN 102153802 | A | 17-08-2011 | NONE | | |
| CN 104893088 | A | 09-09-2015 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5034056 A
- CN 1752130
- WO 2004113439 A
- EP 393959 A
- EP 1254923 A
- WO 2005003199 A
- EP 449939 A

**Non-patent literature cited in the description**

- **J. RANDALL.** *Macromol. Sci., Rev. Macromol. Chem. Phys.,* 1989, vol. C29, 201